# EUROPEAN PATENT SPECIFICATION

(11) **EP 4 042 121 B1**
(45) Date of publication and mention of the grant of the patent: **20.08.2025**
(21) Application number: 20812215.0
(22) Date of filing: 08.10.2020
(51) Int. Cl.: G01L 1/18, G01L 1/22, G01L 1/26, G01L 5/162

(54) **STRAIN MEASURING ASSEMBLY COMPRISING A SENSOR**
DEHNUNGSMESSANORDNUNG MIT EINEM SENSOR
ENSEMBLE DE MESURE DE CONTRAINTE COMPRENANT UN CAPTEUR

(30) Priority: 11.10.2019 CZ 20190636
(43) Date of publication of application: 17.08.2022
(73) Proprietor: 4dot Mechatronic Systems s.r.o., 639 00 Brno (CZ)
(72) Inventor: OTOUPALIK, Jan, 66447 Strelice (CZ); BURIAN, Josef, 67571, Namest nad Oslavou (CZ); KAPLAN, Tomas, 56117, Dlouha Trebova (CZ)
(74) Representative: Dadej, Leopold
(86) International application number: PCT/CZ2020/050076
(87) International publication number: WO 2021/068998

(56) References cited:
- WO-A1-2006/037969
- US-A1- 2009 179 764
- US-A1- 2015 296 622
- US-B1- 6 739 199

## Description

### Technical field

The invention relates to a strain measuring assembly for measuring strain at the place of application and adapted to withstand aggressive environments in industrial applications.

### Background of the invention

Foil resistance strain gauges are currently commonly used to measure strain in industrial applications. It is usually a strain gauge rosette, i.e. an assembly of several uniaxial strain gauges, which together form a certain angle, applied to a foil pad. This pad is then glued to the measured point. Such a solution is disclosed, for example, in EP-451636 B1. A disadvantage of such a solution is the low resistance of the foil pad to contact with lubricants, which can lead to etching of the pad. In addition, the foil pad does not provide sufficient protection from moisture, temperature fluctuations, and vibrations, which can, for example, cause damage to the strain gauges or disconnect the conductors soldered to the sensor. A similar solution is disclosed in document EP3255388 A1, in which a foil carrier for sensors is described.

Strain gauges with foam material pads are also known. This material is stronger than the foil used in the above-mentioned sensors, but its resistance to high temperature and presence of chemicals is not high enough to ensure a long life of the sensors or to remove the sensors from the measured point and re-use them.

Document US8726741 B2 discloses a strain gauge sensor comprising a printed circuit board, which includes a plurality of through holes for receiving the strain gauges. To attach and secure these tensors in the holes in the board, the described sensor is further provided with a sensor body, which carries the strain gauges as well as the printed circuit board. The strain gauges with the printed circuit board are mounted on the measured surface by means of the said sensor body.

Further examples of strain sensors are described in documents US2015296622A1, US6739199B1, and WO2006037969A1. The sensors are adapted for direct mounting to touch sensors, printed circuit boards, MEMS (Micro Electro Mechanical Systems) devices etc. These sensors are therefore not usable in heavy industrial applications since they would not withstand e.g., mounting to an industrial machine or repeated mechanical or chemical stress.

A stress sensor solution is also known, in which a strain gauge is placed in a metal case and encapsulated by silicone. However, these covered sensors use resistance strain gauges; the use of semiconductor strain gauges, which have a significantly higher sensitivity and thus provide significantly higher accuracy when measuring stress, or when measuring strain, is not known in their cases.

### Summary of the Invention

The sensor body can be, for example, a cylinder, a cuboid, or another prism made of a solid material, wherein the height of the sensor body can be significantly smaller than the width and length, so the sensor body takes form of a board of any shape. The sensor body can be made, for example, of a composite material, metal, or polymer, preferably capable of withstanding high temperatures and/or mechanical and/or chemical stress.

The protuberant portion of the contact area may be any elements that mediate contact between the sensor body and the measured surface, i.e. are closer to the measured surface than the recessed portion. The protuberant portion is therefore protuberant (towards the measured surface) relative to the recessed portion, and the recessed portion carrying the semiconductor strain gauge is offset from the measured surface. Preferably, the semiconductor strain gauge is as close to the measured surface as possible to provide the most accurate measurement possible.

The recessed portion may be, for example, a recess, wherein the depth of the recess is sufficient to hide the entire body of the strain gauge inside the recess. The recess can be easily created by, for example, milling, and the protuberant portion is a portion of the contact side not covered by the recess, and therefore, no additional portions need to be added to the contact side. Alternatively, it is possible to place a protrusion or protrusions on the contact side of any shape such that the contact side of the measured object is in contact through these protrusions and the portion of the contact side not covered by the protrusions is the recessed portion. These protrusions can be made in one piece with the sensor body, or they can be mounted on the sensor body, for example by gluing. Alternatively, these protrusions may not be connected to the contact side, for example, they can be placed on the measured surface before placing the strain sensor, and the sensor body is then put and attached to the measured surface such that the contact between the measured surface and the contact side is realized through these protrusions and the semiconductor strain gauge is placed on the contact side outside the point of contact between the sensor body and the protrusions. Alternatively, said protrusions can be a part of the glue by means of which the contact side is attached to the measured object, for example, they can be steel balls mixed in the glue which ensure that the recessed portion of the contact side carrying the semiconductor strain gauge does not get closer to the measured surface than the diameter of the steel balls. For example, thanks to the placement of the semiconductor strain gauge on the recessed portion, there is no risk of the semiconductor strain gauge being crushed when the sensor body is pressed against the measured surface during gluing. The glue comprising the protrusions forming the protuberant portion of the contact side can be for example applied only to the edges of the board, and the middle portion of the board with the semiconductor strain gauge can be encapsulated and glued by a conventional glue suitable for gluing strain gauges.

For example, any semiconductor component that changes its resistance depending on the mechanical deformation (strain) can be used as the semiconductor strain gauge. Conventional semiconductor strain gauges, for example, with a strain gauge body made of boron- or aluminum-doped silicon and metal conductive contacts of the strain gauge, provide significantly more accurate measurement than resistance (metal) strain gauges. The measured surface, to which the contact side of the sensor body is attached, can be the surface of the measured object itself, i.e. e.g. surface of the machine component with strain to be measured, but it can also be the surface of another body with strain dependent upon the strain of the measured object.

In a preferred embodiment, the sensor body is a printed circuit board. The use of the printed circuit board allows for a relatively cheap series production. Alternatively, a different board can be used, one which is not a printed circuit board yet can be provided on the outer side with some kind of connection for signal transmission from the semiconductor strain gauge. The thickness of the board is preferably such that it is possible to form a recessed portion therein for housing the strain gauge. The printed circuit board can also be multi-layer, the use of such a board for the sensor body results in smaller dimensions of the sensor body such that the strain sensor takes up less space on the measured surface, or the placement of the strain sensor then requires less space on the measured surface.

In a preferred embodiment, the strain sensor of the invention comprises three semiconductor strain gauges. For example, these semiconductor strain gauges can be arranged such that two of the semiconductor strain gauges are rotated from each other in the contact side plane by 80° to 100°, preferably by 85° to 95°, and the third of the semiconductor strain gauges is rotated from the first of the semiconductor strain gauges in the contact side plane by 35° to 55°, or by 125° to 145°, preferably by 40° to 50°, or by 130° to 140°. Alternatively, each of the three semiconductor strain gauges can be rotated from the other semiconductor strain gauges in the contact side plane by 110° to 130°, preferably by 115° to 125°. These arrangements allow stress measurements in multiple axes so that it is possible, for example, to determine the directions and magnitudes of the principal stresses.

The strain sensor can comprise two semiconductor strain gauges that are rotated relative to each other in the contact side plane by 80° to 100°, preferably by 85° to 95°. Similarly to the embodiments described in the previous paragraph, measurement in multiple axes is also possible here.

Preferably, the contact side of the sensor body is provided with a conductive metal structure. Usually, it is a copper plating, since copper has a high conductivity and a relatively low cost, but other metals can be used as well. The conductive metal structure improves heat conduction. Preferably, the conductive metal structure takes the form of a grid which helps to conduct heat and, at the same time, acts as a roughening of the surface, which leads to improved adhesive properties of the contact side when gluing the strain sensor. Preferably, the conductive metal structure is placed on the protuberant portion of the contact side.

The outer side of the sensor body can comprise conductive connections, preferably provided with holes. The conductive connections can be for example flat connections. The holes in the conductive connections can be round holes passing through the entire thickness of the conductive connection, which are regularly spaced on the conductive connection. Preferably, the spacing of the holes is such that each line extending across the width of the conductive connection (i.e., such a line that a crack or section made through that line interrupts the conductive connection) passes through at least one hole. The holes are used to stop the propagation of cracks that can occur in the conductive connections due to high stress when using the strain sensor on industrial machines or in other demanding conditions. Since the possible crack is stopped in the hole, the conductive connection is not interrupted and the risk of the strain sensor or one of its components failing is decreased. Furthermore, the conductive connection can be, for example, conductors, preferably insulated such that they are not damaged due to adverse environmental influences.

In a preferred embodiment, the strain sensor further comprises a temperature sensor. The temperature sensor allows to perform temperature compensation, which is preferred for measuring strain using the semiconductor strain gauge. The temperature sensor can be, for example, any component with resistance dependent on temperature thereof. The values measured by the temperature sensor are used by a suitable computing unit for (software) temperature compensation of the values measured by the semiconductor strain gauge. Temperature compensation using the temperature sensor is, in comparison to the commonly used temperature compensation by connecting strain gauges to a Wheatstone bridge, simpler, cheaper, and requires less space on the measured object. The strain sensor with the temperature sensor provides to the user not only information about the strain but also information about the temperature of the measured surface.

Preferably, the temperature sensor is placed on the outer side and comprises a temperature sensor body and conductive contacts of the temperature sensor, wherein the contact side comprises a conductive metal structure and the sensor body comprises a plated hole thermally conductively connecting the temperature sensor body or at least one of the conductive contacts of the temperature sensor with the conductive metal structure of the contact side. Placement of the temperature sensor on the outer side and the conductive connection thereof with the contact side is technologically simpler than the placement of the temperature sensor on the contact side together with the semiconductor strain gauge. Thanks to the conductive metal structure and the plated hole in the sensor body, the temperature sensor on the outer side can provide sufficiently accurate measurements of the temperature of the measured surface.

Preferably, the sensor body is partially covered with a covering material, wherein the contact side is not covered with the covering material. The covering material can be any material suitable for interaction with electronics, therefore, it can be a material which is thermally conductive but not electrically conductive and which does not cause either the conductive connection or other components of the strain sensor to degrade. The ductility of the covering material is preferably greater than the ductility of the sensor body so the covering material does not, due to its rigidity, significantly affect the deformation of the strain sensor, i.e. does not significantly affect the measured values. The covering material can be, without limitation, polyurethane, epoxy, rubber, acrylate, silicone, or silicone-containing material (e.g. a silicone resin).

The outer side of the sensor body can comprise contact areas for connection of conductors for signal transmission to the measuring unit and contact areas for connection of the conductive contacts of the strain gauge, or the conductive contacts of the temperature sensor. The contact areas can be made by, for example, plating the outer side and etching off a portion of the plating, or they can be glued to the outer side.

Preferably, the sensor body is provided on the contact side with a locking element, e.g. a protrusion that fits into a suitably shaped slot on the measured surface, a slot, or a through hole into which a suitable shaped protrusion on the measured surface fits, etc. The locking element preferably is shaped to, in combination with its counterpart on the measured surface, unambiguously determine the position of the strain sensor. This ensures the correct location and correct direction of mounting, the orientation of the semiconductor strain gauge is precisely determined, and thus the measurement direction of the strain sensor is precisely determined.

The strain sensor can comprise a protective cover which covers the outer side and the lateral sides of the sensor body. The contact side of the sensor body thus remains accessible in order to be glued to the measured surface, whereas the outer side and components placed on the outer side are better protected from environmental influences, e.g. from mechanical damage. The protective cover can be made of, for example, steel, or aluminum, or another metal; a protective cover made of a suitable polymer can be used as well.

According to the invention, the above shortcomings can be eliminated to a certain extent by using a strain measuring assembly comprising the strain sensor above and a case comprising a case body, wherein the sensor body is glued into the case on the contact side and the strain sensor is hermetically sealed in the case body. Therefore, in such an embodiment, the measured surface is the inner surface of the case, and the strain of the measured object is measured indirectly through the strain of the case. Thanks to the hermetic sealing of the strain sensor in the case, the strain sensor is protected from the damage of the demanding environmental conditions, e.g. from mechanical, chemical, thermal damage, or a combination thereof. The shape and the material of the case is preferably selected such that the case has the same rigidity in all directions (or at least in the direction of the measurement by the semiconductor strain gauge). As a result, the case does not fundamentally affect the measured strain values and a high measurement accuracy is maintained.

The case is provided with holes for attachment by means of screws. The attachment of the case with the strain sensor using screw connections allows relatively easy mounting and demounting without the need to degrease the surface of the measured object. Alternatively, the case can be also glued, however, unlike in the case of screwing, the strain sensor in the glued case can be less accurate, and when the material (i.e. glue, material of the case, or material of the measured object) degrades, measurement can be thwarted or measurement accuracy can decrease.

The case further comprises at least two legs of the case, wherein each leg of the case comprises a leg contact area for contact with the measured object. The leg contact area on at least one leg of the case lies in a plane different from the plane in which the leg contact area lies on at least one other leg of the case. The contact between the case and the measured object is therefore realized via the case legs, and the contact areas of the legs are not all in one plane, preferably, they are not even parallel to each other. When tightening the screws, the leg contact areas of the case align with the surface of the measured object. This creates a bias in the case, wherein the bias can be a tension bias and/or compression bias depending on the direction of the chamfering of the individual contact areas of the legs. Preferably, the direction of bias and the kind of bias (tension and/or compression) of the case correspond to the direction of measurement and the kind of measurement (tension or compression measurement).

The contact area of each leg of the case can for example move away from the case body in a plane parallel to the measured surface in the direction towards the center of the case. Due to the alignment of the leg contact areas when tightening the screws, the portions of the legs closer to the case body tend to move away from the center of the case, and this causes the case to be tension biased. If the contact areas of the legs get closer to the case body in the same direction, the case is compression biased after tightening the screws.

The bias of the case is suitable particularly for measuring dynamic processes, i.e. measuring short-term differences in the strain (or stress) of the measured object and not measuring the absolute strain value. If the bias is decreased due to material degradation, for example, due to rusting of the material, the dynamic processes can still be measured, which would not be possible, for example, in case of strain sensors mounted on the measured object by gluing. If material degradation does not occur, the strain measuring assembly with a biased case can be used also for measuring static processes, i.e. measuring the absolute strain value.

### Description of Drawings

A summary of the invention is further clarified using exemplary embodiments thereof, which are described with reference to the accompanying drawings, in which:
Fig. 1 Shows a view of the strain sensor of the invention with the contact side fitted with semiconductor strain gauges,
Fig. 2 Shows a view of the outer side of the strain sensor,
Fig. 3 Shows a section through the strain sensor of Fig. 1,
Fig. 4 Shows the strain measuring assembly of the invention, comprising the case provided with the strain sensor, prior to encapsulating the strain sensor and closing the case,
Fig. 5 Shows the case with the strain sensor in an A-A section of Fig. 4,
Fig. 6 Shows the open side of the cover of the strain sensor provided with the cover, and
Fig. 7 Shows a B-B section through the strain sensor with the cover of Fig. 6.

### Exemplary Embodiments of the Invention

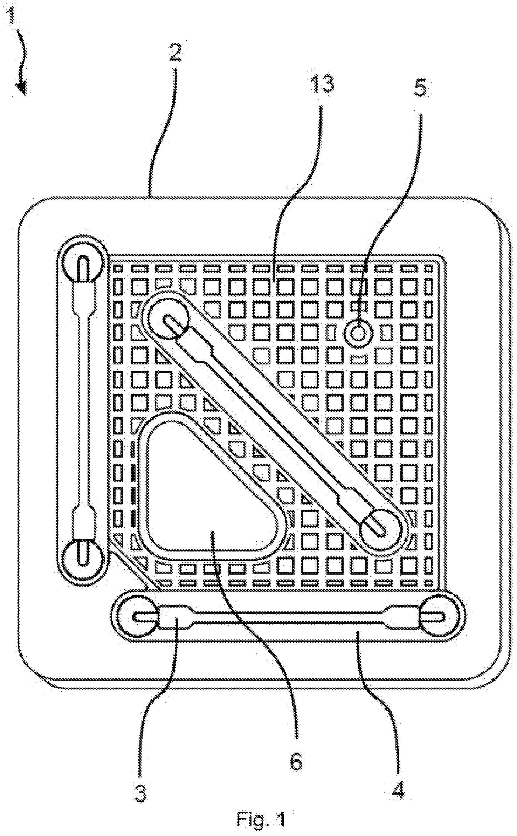

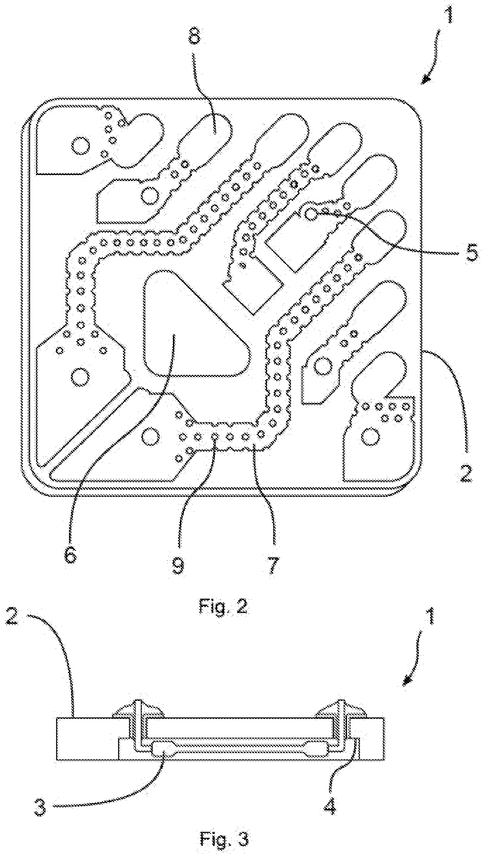

A strain sensor 1 comprises a sensor body 2 comprising a contact side for attachment to the measured object, and an outer side opposite the contact side. The strain sensor 1 of the invention is shown in Figs. 1 to 3, viewed from both sides and in a section, the outer side of Fig. 2 is for clarity shown before soldering the conductors and other components of the strain sensor 1. In this embodiment, the sensor body 2 is a printed circuit board, wherein both sides of the printed circuit board comprise a conductive metal structure 13 in the form of a copper plating. The strain sensor 1 further comprises three semiconductor strain gauges 3, three recesses 4 for housing the strain gauges on the contact side, and a temperature sensor (not shown). Each semiconductor strain gauge 3 comprises a semiconductor strain gauge body and two conductive contacts of the strain gauge, and the temperature sensor comprises a temperature sensor body and conductive contacts of the temperature sensor. Therefore, in this embodiment, the recessed portion of the contact side are recesses 4 for housing the strain gauges, and the protuberant portion is the remainder of the contact side, i.e. its non-recessed portion, as can be seen in Fig. 1 or in a section in Fig. 3.

In this embodiment, the printed circuit board is square, but alternatively, it can have any shape, e.g. rectangular, circular, semicircular, etc. In this embodiment, it is a laminate board with copper plating on both sides with thickness approximately 1 mm. The printed circuit board comprises the recesses 4 for housing the strain gauge, which, in this embodiment, are milled grooves and which are arranged on the contact side of the printed circuit board in the shape of a triangle and not in contact with each other, two recesses 4 for housing the strain gauge are parallel to two adjacent rims of the contact side, and the third recess 4 for housing the strain gauge lies in approximately one of the diagonals of the contact side. Therefore, the two recesses 4 for housing the strain gauge lying next to the edges of the printed circuit board parallel to them together form an angle of 90°, and together with a third recess 4 for housing the strain gauge form an angle of 45°. Each recess 4 for housing the strain gauge is provided at both ends with plated through holes for bringing the contacts of the strain gauge to the outer side. Alternatively, the printed circuit board can be of any thickness and can be made of a different material; known materials for the production of printed circuit boards are, for example, corundum ceramics or PTFE.

The printed circuit board further comprises a plated through hole 5 for heat conduction from the contact side to the outer side. The copper plating in the middle portion of the contact side has the form of a grid (see Fig. 1), which does not extend to the recesses 4 for housing the strain gauges and is conductively connected to the plated hole 5 for heat conduction. This grid improves heat conduction from the contact side to the outer side and, on top of that, improves the adhesive properties of the printed circuit board when the board is being glued to the measured surface. Inside the recesses 4 for housing the strain gauge, the edges of the holes for bringing the conductive contacts of the strain gauges are plated. The edges around the entire circumference of the contact side are solid plated, i.e. the plating does not take the form of grid.

The copper plating of the outer side of the printed circuit board takes the form of contact areas. In this embodiment, the outer side comprises eight contact areas 8 for connecting the conductors for signal conduction from the semiconductor strain gauges 3 and the temperature sensor to the measuring unit, and eight contact areas which connect the conductive contacts of the strain gauges and the conductive contacts of the temperature sensor. One through hole passes through each contact area for connecting the conductive contacts of the strain gauges from the recess 4 for housing the strain gauge on the contact side, and the through hole 5 for heat conduction passes through one of the contact areas for connecting the conductive contacts of the temperature sensor, wherein these plated through holes are conductively connected to the respective contact area. Each contact area for connecting the conductive contacts of the strain gauges and conductive contacts of the temperature sensor is connected using the copper conductive connection 7 to one contact area 8 for connecting the conductors for signal conduction to the measuring unit, as seen in Fig. 2, where the contact areas 8 for connecting the conductors have an oval shape and are placed along the upper and right side of the printed circuit board. The conductive connections 7 are provided with small circular holes 9 which are used to prevent the propagation of possible cracks in the conductive connections 7 arising when the strain sensor 1 is under stress. Alternatively, these holes 9 in the conductive connections 7 can be of any other shape, for example, they can be oval or can have the shape of a portion of an annulus (i.e. resembling a crescent). Preferably, these holes 9 do not comprise sharp corners where stress concentration could occur.

Furthermore, the printed circuit board is provided in its central portion with the locking element 6 in form of a locking through hole in the shape of a right triangle with rounded corners, which ensures the exact position of the printed circuit board on the measured surface when there is a counterpart on the measured surface which fits into this locking hole. Alternatively, the locking element 6 can be a locking recess, i.e. a locking hole which is not a through hole. The locking element 6 can have any shape, preferably such that by placing it on the counterpart on the measured surface, the position of the printed circuit board is unambiguously determined, e.g. a semicircle, an uneven triangle, or a trapezoid. Alternatively, the unambiguity of the position can be ensured by a larger amount of suitably arranged locking elements 6, i.e. holes or recesses of any shape with corresponding counterparts on the measured surface.

In the first exemplary embodiment, the semiconductor strain gauge 3 is a semiconductor strain gauge 3 with conductive contacts made of gold. Alternatively, the conductive contacts of the strain gauge can be silver or partially gold and partially silver. When fitting the semiconductor strain gauges 3, the conductive contacts of the strain gauge are first bent to the required pitch and then the semiconductor strain gauge 3 is inserted into the center of the recess 4 for housing the strain gauge on the contact side, parallel to the longer edges of the given recess 4 for housing the strain gauge, and the conductive contacts of the strain gauge are extended through the plated holes to the outer side. On the respective contact areas on the outer side, the extended conductive contacts of the strain gauge are soldered so that the semiconductor strain gauge 3 is as small a distance from the protuberant portion of the contact side as possible. After the conductive contacts of the strain gauge are soldered, the remaining ends of the conductive contacts are shortened. In the same manner, all three semiconductor strain gauges 3 are fitted into the sensor body 2.

In an alternative embodiment, several semiconductor strain gauges 3 can be placed in at least one of the recesses 4 for housing the strain gauges. The larger number of the semiconductor strain gauges 3, which are arranged in parallel, can then be considered as one strain gauge with less resistance.

In the first exemplary embodiment, the temperature sensor is platinum, designed for surface mounting on the printed circuit board. It is soldered to the respective contact areas with lead-free tin. Simultaneously, it is conductively connected to the plated hole 5 for heat conduction. The temperature sensor is used to compensate for the temperature dependence of the measurement with the semiconductor strain gauges 3. In an alternative embodiment, the temperature sensor comprises two temperature sensors described above, connected in parallel, in case one of the sensors fails. In this manner, redundancy in temperature measurement is created. In case one of the temperature sensors fails, it is still possible to measure the temperature using the other temperature sensor. In another alternative embodiment, the temperature sensor can be placed on the contact side, wherein the conductive contacts of the temperature sensor are brought to the outer side, similarly to the conductive contacts of the strain gauges.

The second exemplary embodiment of the strain sensor 1 comprises the strain sensor 1 of the first exemplary embodiment which is further provided with a covering material intended for interaction with electronics to allow uses thereof in operations with poor external conditions. In this embodiment, thermally curable silicone intended for encapsulating electronics is used to protect the strain sensor 1. Heat-resistant conductors which are not damaged when encapsulating the sensor body 2 by silicone and due to which it is possible to use the strain sensor 1 in heat-demanding conditions are used to transmit signal from the strain sensor 1.

The strain sensor 1 is placed on the measured surface via the contact side of the sensor body 2 by gluing. Before the gluing, the contact side and the area of the measured surface are degreased. A glue intended for strain gauges or, for example, a two-component epoxy glue, is then applied to the measured surface, and the strain sensor 1 is glued. The semiconductor strain gauges 3 are encapsulated by the glue such that stresses and deformations from the measured surface are transmitted to the semiconductor strain gauges 3 through the glue. When using the strain sensor 1 encapsulated by silicone of the second exemplary embodiment, the strain sensor 1 is protected from external influences without preventing its use in confined spaces.

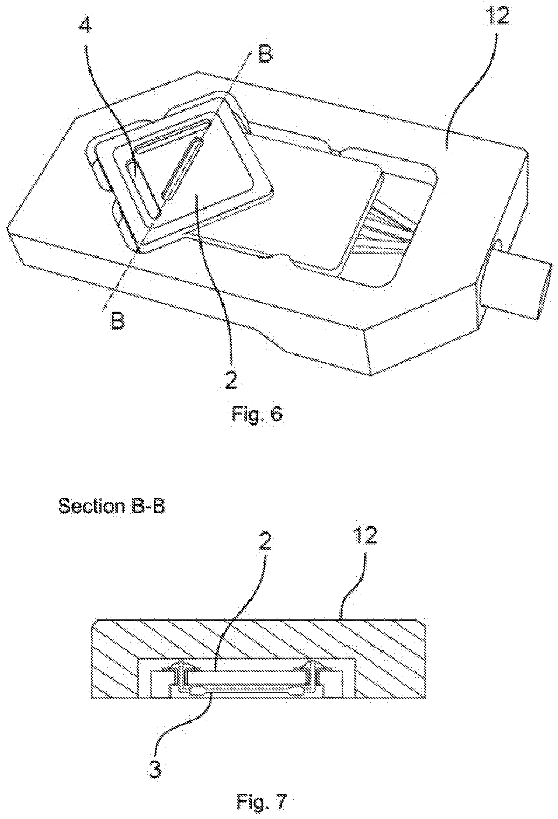

The third exemplary embodiment of the strain sensor 1 comprises the strain sensor 1 of the first exemplary embodiment encapsulated by silicone as in the second exemplary embodiment. After encapsulation by silicone, the strain sensor 1 is inserted into the metal cover 12 which protects the strain sensor 1 from all sides except for the contact side, which is accessible through the hole on the respective side of the cover 12 (see Figs. 6 and 7). The strain sensor 1 housed in the metal cover 12 is encapsulated by silicone again such that it is additionally protected and, simultaneously, it is firmly retained in the cover 12 by the silicone. To transmit signal from the strain sensor 1, shielded multicore conductor for high temperatures with twisted pairs is used in this embodiment, which is secured against tension by means of a set screw. The strain sensor 1 in the cover 12 is glued to the measured object in a manner similar to the one described in the second exemplary embodiment.

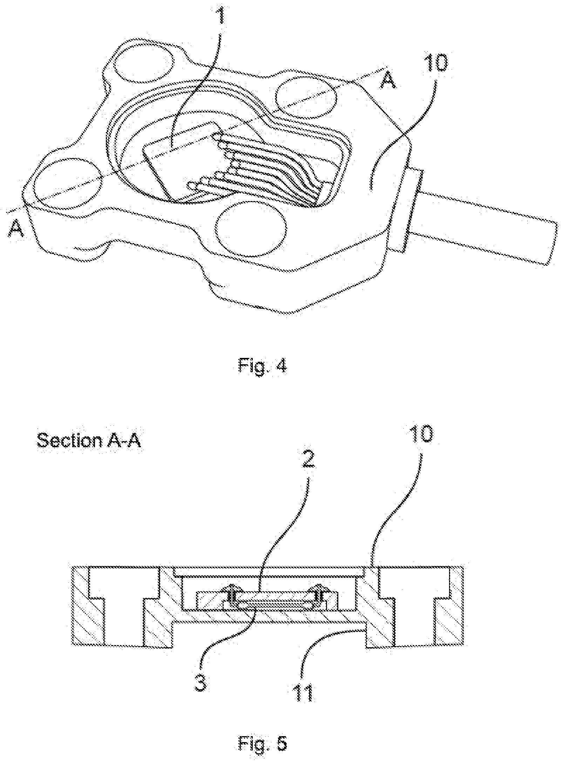

According to the invention as shown in Fig. 4 and 5, the strain sensor 1 is encapsulated by silicone as in the second exemplary embodiment, and it is a part of the strain measuring assembly, which further comprises a metal case 10, which takes form of a rectangular plate that, on one side, contains a slot for the strain sensor 1. The case 10 is made of steel. On one lateral side, this case 10 comprises a through hole into the slot for the sensor which is used to guide the conductors for signal transmission from the strain sensor 1, and four through holes for screws are positioned around the slot for the sensor. On the side of the case 10 opposite the slot for the sensor, the edges of these holes for screws are protuberant such that they form legs 11 of the case 10, wherein the legs 11 of the case 10 comprise chamfered contact areas of the legs that move away from the printed circuit board towards the center of the printed circuit board (see Fig. 5), and wherein the contact between the measured object and the case 10 is realized through the legs 11 of the case 10, specifically, through the leg contact areas. Due to the chamfering of the legs 11 of the case 10, the case 10 is biased after the case 10 is screwed in, which is caused by the fact that the chamfered contact areas on the legs 11 of the case 10 are aligned with the surface of the measured object. The strain sensor 1 is glued into the metal case 10 using its contact side such that it measures the strain of the measured object indirectly by measuring the strain of the case 10 itself. In the slot for the sensor, the strain sensor 1 is further encapsulated by silicone, and then this slot is covered by a covering sheet. The covering sheet is welded to the case 10, and the strain sensor 1 is hermetically sealed in it so that it is protected from environmental influences. To transmit signal from the strain sensor 1, shielded multicore conductor for high temperatures with twisted pairs is used in this embodiment, which is secured against tension by means of the set screw. The set screw is placed in the hole which is guided through the case 10 approximately perpendicularly to the hole for guiding the multicore conductor, and when tightened well, it pushes on the outer insulation of the multicore conductor such that the multicore conductor is retained, and when it is pulled, the individual conductors soldered to the printed circuit board are not torn out.

The strain sensor 1 is mounted on the measured object by screwing thereof into pre-drilled threaded holes. By screwing the case 10 to the measured object, the encapsulated strain sensor 1 glued inside the case 10 is biased. As described above, the bias is achieved by chamfering the legs 11 of the case 10. When the screws are tightened, the chamfered ends of the legs 11 of the case 10 are aligned with the surface of the measured object, and thus bias occurs. The bias of the case 10 is suitable particularly for measuring dynamic processes, i.e. measuring short-term differences in the strain (or stress) of the measured object and not measuring the absolute strain value. If the bias is decreased due to material degradation, for example, due to loosening of the screws, the dynamic processes can still be measured, which would not be possible, for example, in case of strain sensors 1 mounted on the measured object by gluing. If material degradation does not occur, the strain measuring assembly with the biased case 10 can be used also for measuring static processes, i.e. measuring the absolute strain value. In addition, mounting using screws allows the strain sensor 1 to be used repeatedly for measuring in various places, wherein it is not necessary to modify (e.g. degrease) the surface of the measured object for screwing. The described method of protection using the case 10 allows the use of the strain sensor 1 in demanding conditions in heavy industry of forming machines.

In an alternative embodiment of the strain sensor 1 which is a part of the strain measuring assembly, i.e. the strain sensor 1 with the case 10, the case 10 can be hermetically sealed using the encapsulating material. The hermetic sealing of the case 10 using the encapsulating material is less difficult to produce and sufficient in applications with minimal mechanical stress on the surface of the strain sensor 1. Simultaneously, the encapsulating material can be the same material as the covering material described in the case of the second exemplary embodiment, and it can also be any other material suitable for use as the covering material.

However, preferably, the encapsulating material is a material with greater resistance to mechanical damage than that of the covering materials. While it is preferable for the covering materials to have a higher ductility than the sensor body 2, the encapsulating materials can have a lower ductility without significantly affecting the measurement. The encapsulating material does not come in direct contact with the sensor body 2 and electronic components on the sensor body 2, so it does not have to be a material suitable for interacting with electronics. For example, the encapsulating material can be silicone, rubber, epoxy, polyurethane, etc.

In an alternative embodiment of the strain sensor 1 which is a part of the strain measuring assembly, i.e. the strain sensor 1 with the case 10, the case 10 can be hermetically sealed using a screwed cover. Hermetic sealing of the case 10 by means of a screw connection is less difficult to produce and allows a relatively easy reopening of the case 10, however, it does not have as high resistance to stress as hermetic sealing by welding.

In an alternative embodiment, the sensor body 2 can be provided on the contact side with only one recess 4 for housing the strain gauge and only one semiconductor strain gauge 3. The outer side then comprises the temperature sensor, only four contact areas 8 for connecting the conductors for signal conduction from the semiconductor strain gauge 3 and the temperature sensor to the measuring unit, and four contact areas for connecting the conductive contacts of the strain gauge and the conductive contacts of the temperature sensor. The other features of the strain sensor 1 are realized in this embodiment in the same manner as in any of the embodiments described above.

### List of Reference Signs

1 - Strain sensor
2 - Sensor body
3 - Semiconductor strain gauge
4 - Recess for housing the strain gauge
5 - Plated hole for heat conduction
6 - Locking element
7 - Conductive connection
8 - Contact area for connecting the conductors
9 - Hole
10 - Case
11 - Leg of the case
12 - Cover
13 - Conductive metal structure

## Claims

1. A strain measuring assembly for industrial applications comprising a case (10) and a strain sensor (1) comprising a sensor body (2) and at least one semiconductor strain gauge (3) comprising a strain gauge body and two conductive contacts of the strain gauge, through which the semiconductor strain gauge (3) is attached to the sensor body (2), wherein the sensor body (2) comprises a contact side for attachment to an inner surface of the case (10) and an outer side opposite the contact side, and wherein the case (10) comprises a body of the case (10), wherein the contact side comprises a protuberant portion for contact with the inner surface of the case (10) and a recessed portion, on which the semiconductor strain gauge (3) is placed, wherein both conductive contacts of the strain gauge are brought to the outer side of the sensor body (2), and wherein the sensor body (2) is glued into the body of the case (10) via the contact side, wherein the sensor body (2) is hermetically sealed by the body of the case (10) from the outer side,
**characterized in that**:
the case (10) comprises holes for attachment by means of screws and the case (10) further comprises at least two legs (11) of the case (10), and **in that** each leg (11) of the case (10) comprises a leg contact area for contact with a measured object, wherein the leg contact area on at least one leg (11) of the case (10) lies in a plane different from the plane in which the leg contact area lies on at least one other leg (11) of the case (10) for creating a tension and/or compression bias in the case (10) during tightening of the screws.

2. The strain measuring assembly of claim 1, **characterized in that** the sensor body (2) of the strain sensor (1) is a printed circuit board.

3. The strain measuring assembly of any one of claims 1 and 2, **characterized in that** the recessed portion of the contact side of the sensor body (2) is a recess (4) for housing the strain gauge, wherein the entire volume of the strain gauge body is inside the recess (4) for housing the strain gauge.

4. The strain measuring assembly of any one of claims 1 to 3, **characterized in that** the strain sensor (1) comprises at least two semiconductor strain gauges (3).

5. The strain measuring assembly of any one of claims 1 to 4, **characterized in that** the outer side of the sensor body (2) comprises conductive connections (7) that are provided with holes (9).

6. The strain measuring assembly of any one of claims 1 to 5, **characterized in that** the strain sensor (1) further comprises a temperature sensor.

7. The strain measuring assembly of any one of claims 1 to 6, **characterized in that** the contact side of the sensor body (2) comprises a conductive metal structure (13).

8. The strain measuring assembly of claim 6, **characterized in that** the temperature sensor is placed on the outer side and comprises a temperature sensor body and conductive contacts of the temperature sensor, wherein the contact side comprises the conductive metal structure (13) and the sensor body (2) comprises a plated hole (5) for heat conduction thermally conductively connecting the temperature sensor body or at least one of the conductive contacts of the temperature sensor with the conductive metal structure (13) of the contact side.

9. The strain measuring assembly of any one of claims 1 to 8, **characterized in that** the sensor body (2) is partially covered with a covering material so that the contact side is not covered with the covering material, wherein the covering material is any material adapted for interacting with electronics and the ductility of the covering material is greater than the ductility of the sensor body (2).

10. The strain measuring assembly of any one of claims 1 to 9, **characterized in that** the outer side of the sensor body (2) comprises contact areas (8) for connecting the conductors for signal transmission to the measuring unit and contact areas for connecting the conductive contacts of the strain gauge.

## Patentansprüche

1. Eine Verformungsmessanordnung für industrielle Anwendungen, die ein Gehäuse (10) und einen Verformungssensor (1) umfasst, der einen Sensorkörper (2) und mindestens einen Halbleiter-Dehnungsmessstreifen (3) umfasst, der einen Dehnungsmessstreifenkörper und zwei leitfähige Kontakte des Dehnungsmessstreifens umfasst, durch die der Halbleiter-Dehnungsmessstreifen (3) am Sensorkörper (2) befestigt ist, wobei der Sensorkörper (2) eine Kontaktseite zur Befestigung an einer Innenfläche des Gehäuses (10) und eine Außenseite gegenüber der Kontaktseite umfasst, und wobei das Gehäuse (10) einen Körper des Gehäuses (10) umfasst, wobei die Kontaktseite einen vorstehenden Abschnitt zum Kontakt mit der Innenfläche des Gehäuses (10) und einen vertieften Abschnitt, auf dem der Halbleiter-Dehnungsmessstreifen (3) angeordnet ist, umfasst, wobei die beiden leitfähigen Kontakte des Dehnungsmessstreifens auf die Außenseite des Sensorkörpers (2) gebracht werden, und wobei der Sensorkörper (2) über die Kontaktseite in den Körper des Gehäuses (10) eingeklebt ist, wobei der Sensorkörper (2) durch den Körper des Gehäuses (10) von der Außenseite hermetisch abgedichtet ist,
**dadurch gekennzeichnet, dass:**
das Gehäuse (10) Löcher zur Befestigung mittels Schrauben umfasst und das Gehäuse (10) ferner mindestens zwei Schenkel (11) des Gehäuses (10) umfasst, und **dass**
jeder Schenkel (11) des Gehäuses (10) einen Schenkelkontaktbereich zur Kontaktierung mit einem Messobjekt umfasst, wobei der Schenkelkontaktbereich an mindestens einem Schenkel (11) des Gehäuses (10) in einer Ebene liegt, die sich von der Ebene unterscheidet, in der der Schenkelkontaktbereich an mindestens einem anderen Schenkel (11) des Gehäuses (10) liegt, zum Erzeugen einer Zug- und/oder Druckvorspannung im Gehäuse (10) beim Anziehen der Schrauben.

2. Die Verformungsmessanordnung nach Anspruch 1, **dadurch gekennzeichnet, dass** der Sensorkörper (2) des Verformungssensors (1) eine Leiterplatte ist.

3. Die Verformungsmessanordnung nach einem der Ansprüche 1 und 2, **dadurch gekennzeichnet, dass** der vertiefte Abschnitt der Kontaktseite des Sensorkörpers (2) eine Ausnehmung (4) zur Aufnahme des Dehnungsmessstreifens ist, wobei sich das gesamte Volumen des Dehnungsmessstreifenkörpers innerhalb der Ausnehmung (4) zur Aufnahme des Dehnungsmessstreifens befindet.

4. Die Verformungsmessanordnung nach einem der Ansprüche 1 bis 3, **dadurch gekennzeichnet, dass** der Verformungssensor (1) mindestens zwei Halbleiter-Dehnungsmessstreifen (3) umfasst.

5. Die Verformungsmessanordnung nach einem der Ansprüche 1 bis 4, **dadurch gekennzeichnet, dass** die Außenseite des Sensorkörpers (2) leitfähige Verbindungen (7) umfasst, die mit Löchern (9) versehen sind.

6. Die Verformungsmessanordnung nach einem der Ansprüche 1 bis 5, **dadurch gekennzeichnet, dass** der Verformungssensor (1) ferner einen Temperatursensor umfasst.

7. Die Verformungsmessanordnung nach einem der Ansprüche 1 bis 6, **dadurch gekennzeichnet, dass** die Kontaktseite des Sensorkörpers (2) eine leitfähige Metallstruktur (13) umfasst.

8. Die Verformungsmessanordnung nach Anspruch 6, **dadurch gekennzeichnet, dass** der Temperatursensor an der Außenseite angeordnet ist und einen Temperatursensorkörper und leitfähige Kontakte des Temperatursensors umfasst, wobei die Kontaktseite die leitfähige Metallstruktur (13) umfasst und der Sensorkörper (2) ein plattiertes Loch (5) zur Wärmeleitung umfasst, das den Temperatursensorkörper oder mindestens einen der leitfähigen Kontakte des Temperatursensors thermisch leitend mit der leitfähigen Metallstruktur (13) der Kontaktseite verbindet.

9. Die Verformungsmessanordnung nach einem der Ansprüche 1 bis 8, **dadurch gekennzeichnet, dass** der Sensorkörper (2) teilweise mit einem Abdeckmaterial bedeckt ist, so dass die Kontaktseite nicht mit dem Abdeckmaterial bedeckt ist, wobei das Abdeckmaterial ein beliebiges Material ist, das zum Zusammenwirken mit Elektronik angepasst ist, und die Duktilität des Abdeckmaterials größer ist als die Duktilität des Sensorkörpers (2).

10. Die Verformungsmessanordnung nach einem der Ansprüche 1 bis 9, **dadurch gekennzeichnet, dass** die Außenseite des Sensorkörpers (2) Kontaktbereiche (8) zur Verbindung der Leiter zur Signalübertragung mit einer Messeinheit und Kontaktbereiche zur Verbindung der leitfähigen Kontakte des Dehnungsmessstreifens umfasst.

## Revendications

1. Un ensemble de mesure de déformation pour des applications industrielles, comprenant un boîtier (10) et un capteur de déformation (1) comprenant un corps de capteur (2) et au moins une jauge de déformation à semi-conducteur (3) comprenant un corps de jauge de déformation et deux contacts conducteurs de la jauge de déformation, à travers lesquels la jauge de déformation à semi-conducteur (3) est fixée au corps de capteur (2), où le corps de capteur (2) comprend un côté de contact pour une fixation à une surface interne du boîtier (10) et un côté externe opposé au côté de contact, et où le boîtier (10) comprend un corps de boîtier (10), où le côté de contact comprend une partie protubérante pour un contact avec la surface interne du boîtier (10) et une partie évidée, sur laquelle la jauge de déformation à semi-conducteur (3) est placée, où les deux contacts conducteurs de la jauge de déformation sont amenés vers le côté externe du corps de capteur (2), et où le corps de capteur (2) est collé dans le corps de boîtier (10) par l'intermédiaire du côté de contact, où le corps de capteur (2) est hermétiquement scellé par le corps de boîtier (10) depuis le côté externe,
**caractérisé en ce que** :
le boîtier (10) comprend des trous pour la fixation au moyen de vis et le boîtier (10) comprend en outre au moins deux pattes (11) du boîtier (10), et **en ce que**
chaque patte (11) du boîtier (10) comprend une zone de contact de patte pour un contact avec un objet mesuré, où la zone de contact de patte sur au moins une patte (11) du boîtier (10) se trouve dans un plan différent du plan dans lequel la zone de contact de patte se trouve sur au moins une autre patte (11) du boîtier (10) pour créer une sollicitation de tension et/ou de compression dans le boîtier (10) pendant le serrage des vis.

2. L'ensemble de mesure de déformation selon la revendication 1, **caractérisé en ce que** le corps de capteur (2) du capteur de déformation (1) est une carte de circuit imprimé.

3. L'ensemble de mesure de déformation selon l'une quelconque des revendications 1 et 2, **caractérisé en ce que** la partie évidée du côté de contact du corps de capteur (2) est un évidement (4) pour loger la jauge de déformation, où le volume entier du corps de jauge de déformation est à l'intérieur de l'évidement (4) pour loger la jauge de déformation.

4. L'ensemble de mesure de déformation selon l'une quelconque des revendications 1 à 3, **caractérisé en ce que** le capteur de déformation (1) comprend au moins deux jauges de déformation à semi-conducteur (3).

5. L'ensemble de mesure de déformation selon l'une quelconque des revendications 1 à 4, **caractérisé en ce que** le côté extérieur du corps de capteur (2) comprend des connexions conductrices (7) qui sont pourvues de trous (9).

6. L'ensemble de mesure de déformation selon l'une quelconque des revendications 1 à 5, **caractérisé en ce que** le capteur de déformation (1) comprend en outre un capteur de température.

7. L'ensemble de mesure de déformation selon l'une quelconque des revendications 1 à 6, **caractérisé en ce que** le côté de contact du corps de capteur (2) comprend une structure métallique conductrice (13).

8. L'ensemble de mesure de déformation selon la revendication 6, **caractérisé en ce que** le capteur de température est placé sur le côté extérieur et comprend un corps de capteur de température et des contacts conducteurs du capteur de température, où le côté de contact comprend la structure métallique conductrice (13) et le corps de capteur (2) comprend un trou plaqué (5) pour la conduction thermique reliant thermiquement de manière conductive le corps de capteur de température ou au moins l'un des contacts conducteurs du capteur de température à la structure métallique conductrice (13) du côté de contact.

9. L'ensemble de mesure de déformation selon l'une quelconque des revendications 1 à 8, **caractérisé en ce que** le corps de capteur (2) est partiellement recouvert d'un matériau de recouvrement de sorte que le côté de contact ne soit pas recouvert du matériau de recouvrement, où le matériau de recouvrement est n'importe quel matériau adapté pour interagir avec l'électronique et la ductilité du matériau de recouvrement est supérieure à la ductilité du corps de capteur (2).

10. L'ensemble de mesure de déformation selon l'une quelconque des revendications 1 à 9, **caractérisé en ce que** le côté extérieur du corps de capteur (2) comprend des zones de contact (8) pour connecter les conducteurs pour une transmission de signal à une unité de mesure et des zones de contact pour connecter les contacts conducteurs de la jauge de déformation.
